(19) Europäisches Patentamt

European Patent Office

Office européen des brevets

(11) Publication number: **0 194 108 B1**

(12) **EUROPEAN PATENT SPECIFICATION**

(45) Date of publication of patent specification: 10.04.91    (51) Int. Cl.⁵: **B60C 3/04**, B60C 11/00

(21) Application number: **86301438.7**

(22) Date of filing: **28.02.86**

(54) A pneumatic radial tyre having a new carcass profile.

(30) Priority: **01.03.85 JP 415/86**

(43) Date of publication of application:
**10.09.86 Bulletin 86/37**

(45) Publication of the grant of the patent:
**10.04.91 Bulletin 91/15**

(84) Designated Contracting States:
**DE FR GB**

(56) References cited:
**EP-A- 0 012 694**     **EP-A- 0 013 194**
**EP-A- 0 103 984**     **DE-A- 2 541 504**
**DE-A- 3 411 909**     **FR-A- 2 499 473**
**GB-A- 2 024 738**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Takeuchi, Akihiro**
**17 Ryugadai 6-chome Suma-ku**
**Kobe-shi Hyogo-ken(JP)**
Inventor: **Horiuchi, Kouichi**
**816-516 Nishijima Ookubocho**
**Akashi-shi Hyogo-ken(JP)**
Inventor: **Ochiai, Kiyoshi**
**4-1 Manabugaoka 3-chome Tarumi-ku**
**Kobe-shi Hyogo-ken(JP)**
Inventor: **Yoshikawa, Hideaki**
**6-10 Kounancho 4-chome Higashinada-ku**
**Kobe-shi Hyogo-ken(JP)**

(74) Representative: **Stewart, Charles Geoffrey**
**SP TYRES UK LIMITED Tyre Technical Division**
**Fort Dunlop Birmingham B24 9QT(GB)**

**Description**

The present invention relates to a pneumatic radial ply tyre having a new carcass profile, and in particular, to a radial tyre suitable for use for truck, bus, light truck or other similar vehicles.

One object is to provide an improved radial tyre, in which the various requirements for this kind of tyre such as resistance to cutting, resistance to wear, durability in high speed running, low fuel consumption and vehicle driving stability are well-balanced with each other and also to provide other characteristics indispensable for the tyre such as comfort in vehicle ride and traction capacity.

Prior art for achieving improvements in the resistance of tyres to wear and cutting and saving of fuel consumption have been such means as the use of rubber highly resistant to wear and cutting for the ground contacting part of the tread and the use of rubber material having high resilience to save fuel.

In such tyres the loss of durability of the tyre in high speed running and saving of fuel consumption due to the use of the rubber compound with high resistance to cutting and wear is compensated by means such as the tread being radially divided into two parts one a cap tread and the other a base tread. Rubber compound with high resistance to cutting and wear is used for the cap tread and rubber compound with low hysteresis loss is used for the base tread.

In such construction, however, there are disadvantages in that the effect in the new tyre condition is lost when the cap tread is worn down because the stiffness of the tread region is reduced. This causes a reduction in vehicle driving stability and traction capacity which are indispensable and fundamental performance requirements for pneumatic tyres. Furthermore, owing to the use of the rubber compound with high resilience whilst the fuel consumption is improved there is a problem that the traction capacity, especially the wet grip performance is reduced. A tyre according to the preamble of claim 1 is known, e.g. from DE-A-2541504.

One object of this invention is to solve the above mentioned problems of the prior art and provide improvements in the resistance of the tread crown part to cutting and wear, durability of the tyre in high speed running, savings in fuel consumption and improved driving stability without decreasing comfort in vehicle ride or the traction capacity of the tyre. This object is achieved by the features of independent claim 1. Further embodiments of the invention are disclosed in the dependent claims.

Embodiments of the invention will now be described, by way of example only, in conjunction with the attached drawings in which:-

Fig 1 schematically illustrates the radial profiles of a tyre according to the present invention, the continuous line and the dotted line indicating the profile when the tyre is inflated to the specified maximum internal air pressure and that in the state before full inflation of the tyre (filled with air of 5% of the specified maximum pressure), respectively; and the alternate long and short dash line indicates a profile in a free equilibrated carcass profile;

Fig 2 is a view showing a cross-sectional structure of the steel radial tyre to be used for a truck and bus;

Fig 3 is a sectional view showing a deformed state of profile of a tyre according to this invention when the tyre is inflated;

Fig 4 is a sectional view showing a deformed state of profile of a tyre according to a prior art tyre when the tyre is inflated with air of the specified maximum pressure;

Fig 5 is a sectional view of carcass profile of tyres presented for testing;

Fig 6 is a view of the mechanism of a machine and a tool for showing a method of testing resistance of the tread to cutting;

Fig 7 is a curvilinear diagram showing the relation between load and deflection of tyres;

Fig 8 is a curvilinear diagram showing the cornering force at different degrees of slip angle; and

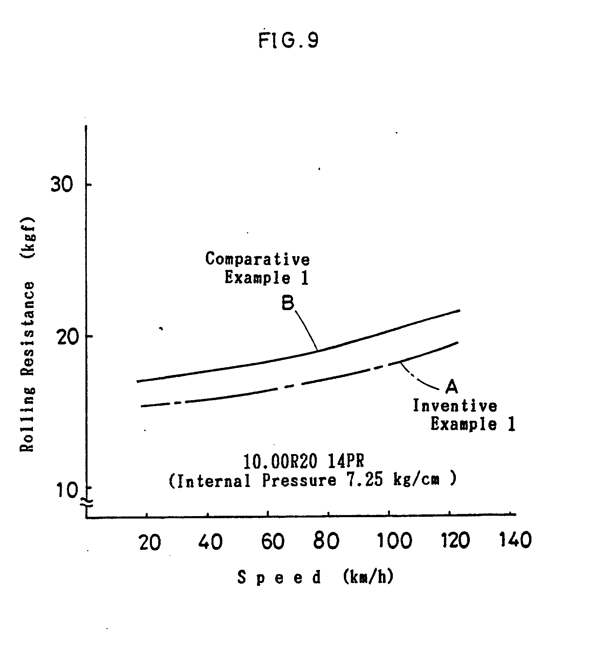

Fig 9 is a curvilinear diagram showing the relation of speed with rolling resistance.

A pneumatic radial ply tyre comprises a tread reinforced with a carcass layer composed of at least a single layer or ply consisting of inextensible or substantially inextensible cords substantially radially arranged in parallel with each other and a tread reinforcing belt layer positioned between said carcass ply and the tread rubber composed of at least two layers of plies each consisting of parallel cords at a comparatively small degree of angle with respect to the circumferential direction of the tyre, the cords of each being crossed with respect to the other ply.

In the tyre tread the radius of curvature TR1 of the radially outer surface of said tread measured when the said tyre is mounted on the rim officially specified for use with that tyre and inflated with air to 5% of the pressure of the specified maximum pressure and a second radius of curvature TR2 produced when the same tyre is inflated with air to the specified maximum pressure are such that the said radii satisfy the relation $1.2 \leqslant TR2/TR1 \leqslant 1.5$. Thus the tyre is constructed so that the tread has a radius of curvature which increases with increasing air pressure. At the same time, however, the radius of curvature of the shoulder part of the carcass ply line is designed to become smaller with increasing air pressure and the radius CR1 of curvature of the shoulder part of the carcass ply line with the tyre at a pressure corresponding to 5% of the specified maximum air pressure and another second radius CR2 of curvature of the said carcass ply line produced when the tyre is inflated with air the specified maximum pressures satisfy the relation $0.70 \leqslant CR2/CR1 \leqslant 0.95$.

In one example a radial ply tyre for a truck or bus has a size of 10.00R20 14PR which is typical of this kind of tyre and is provided with a tread having a radius of curvature ranging from 400 to 600 mm under no load and a tread width from 180 to 200 mm when mounted on the rim of 7.50 x 20 and inflated with air to the regular maximum pressure of 7.25 kg/cm².

To obtain even distribution of contact pressure against the ground surface, that is, to obtain good grip and uniform wear, the radius of curvature of the radially outer surface of the tread should be as large as possible. Thus the tread should preferably be provided with a flatter profile by utilising a large radius of curvature.

However, more importantly to obtain not only excellent resistance to the tyre to wear and cutting, which is one of the objects of this invention, but also to obtain fuel saving and driving stability the tread profile has additionally a radius of curvature so that compressive strain and not tensile strain is generated within the tread crown part when the tyre is inflated with air the specified maximum pressure. This design provides for maintenance of the lateral stiffness of the tread at high level throughout the use of the tyre and, therefore, avoiding the prior disadvantages in vehicle drivability and driving stability.

Similarly, the wet grip performance and traction capacity are both improved because of the increase in stiffness of the tread part and at the same time the tread thickness gauge or depth of tread can be designed to be thin, which results in a light weight tyre together with an improvement in fuel saving and in the durability in high speed running.

With reference to the drawings, one specific embodiment of this invention will now be described in detail.

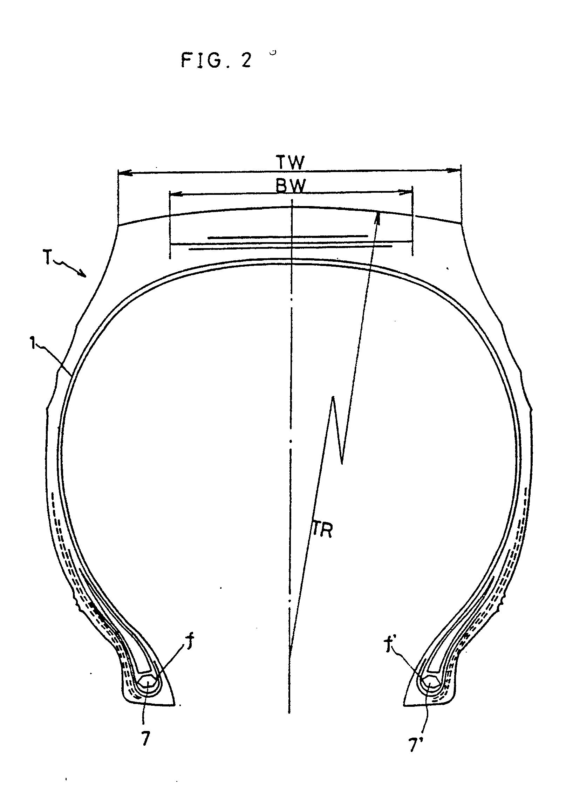

A tyre T of the above type comprises, as shown in Fig 2: a carcass reinforced with at least one single ply 1 of carcass cords, for example, steel cords, extending substantially radially, a tread reinforced with a belt structure composed of a plurality of plies consisting of inextensible or low-extensibility cords, the cords of the plies being arranged at a low bias angle, for example, an angle within the range of 10° to 30°, with respect to the direction of the tyre circumference and being arranged to intersect with the cord directions of adjacent plies, and a pair of bead cores 7. The ends of the carcass ply 1 are wrapped around the bead cores 7 from inside to outside for ply anchorage and the tyre is completed by sidewalls.

It is preferable that the width BW of the belt structure reinforcing the tyre tread ranges from 80 to 95% of the width TW of the tread so that the tread is widely and surely supported and reinforced. Further, the use of a belt layer with the cords of adjacent plies intersecting with each other in triangular pattern is advantageous for the increase in stiffness thereof and resultant reinforcement of the tread. It is preferable for greatest stiffness of the belt structure that at least three plies each composed of low-extensibility or inextensible cords are stacked so as to be in direct contact with each other, wherein the adjacent two plies are arranged at bias angles equal in degree but directionally opposite to each other, preferably both at small angles between 10° to 25°, with respect to the equatorial plane of the tyre and the cords of the third ply at laid at an angle larger than the cords of the former two plies, for example, within the range of 40° to 70° with respect to the above said equatorial plane.

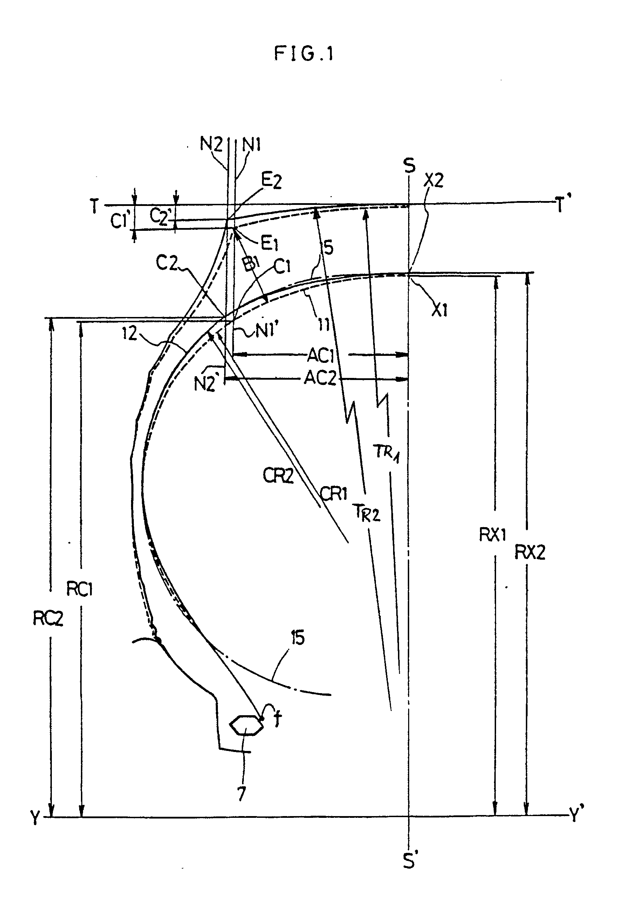

Knowing that the belt layer is of highly stiff structure as above, the inventors of this invention, after examining in various ways a carcass shape which is arranged on the side of the tyre axis adjacent to the belt layer and closely relates to a radius of tread curvature when the tyre is inflated, have found that, as shown in Fig 2, the remaining carcass ply parts except the carcass parts in the crown region of the tyre are firmly bound by the hoop effect of the stiff belt structure as described above and the regions of the tyre above the bead parts which are reinforced with reinforcing layers and bead apexes are comparatively low in stiffness due to their structure and constituent materials and are therefore less resistant to deformation. These regions effect and determine the free balanced profile shape of the tyre. The tyre is designed so that, as shown in Fig 1, these regions act to provide in the shoulder of the tyre a radially curved ply line 11 with a radius of curvature CRI when the tyre is inflated to a pressure corresponding to 5% of the specified maximum air pressure, as shown by a dotted line in Fig 1. This curvature is larger than the radius CR2 of curvature of the same ply in the shape most approximate to free balanced profile 15 as shown by an alternate long and short dash line formed when the tyre is inflated to the specified maximum pressure of air for the tyre. It is preferably arranged that the ratio CR2/CR1 between the radii of curvatures of both ply profiles 11 and 15 falls within the range from 0.7 to 0.95.

The carcass reinforcement ply of the radial structure is in contact with the bead cores 7 and 7' at points f and f'. A length arcuately extending from f to f' represents the width of the carcass layer 1 between the bead cores 7 and 7' and is determined by the external size of tyre, belt layer and rubber gauge. Because of the low-extensibility or inextensible materials of the cords which are arranged at an angle of $90°$ with respect to the equatorial plane of the tyre, the above-mentioned length does not substantially change even when the tyre is inflated with air to the maximum pressure.

In Fig 1 is shown the profile 12 of the ply of the radially expansive surface of the carcass corresponding to a tyre mounted on its designed rim inflated with air to the specified maximum pressure, and non-loaded, and another profile 11 of the ply of the radially expansive surface of the carcass corresponding to the tyre inflated with air to 5% of the specified maximum pressure and again non-loaded The carcass ply is in contact with bead cores 7, 7' at points f and f' and passes through points X1 and X2 at which the line S-S' of the equatorial plane of the tyre intersects the carcass profiles 11 and 12 respectively. The length f-f' of the radially expansive surface of the carcass ply is twice as much as that of f-x. When the tyre is inflated with air to 100% of the specified maximum pressure, a point C2, on the ply line where it intersects the line N2-N2' of a radial plane through the tread edge point E2 is a distance AC2 from the equatorial plane S-S' of the tyre and is also spaced from the axis Y-Y' of the tyre in the radial direction by a distance RC2.

In addition when the tyre is mounted on the specified rim unloaded but inflated with air to 5% of the specified maximum pressure, then the ply profile 11 is such that the intersecting point C1 of the ply and the line N1-N1' of a radial plane through the tread edge point E1 and extending in parallel with the line S-S' of the equatorial plane of the tyre lies radially and axially inside the corresponding point C2 on the radially expansive surface profile 12 of the carcass ply of the tyre put in the above-mentioned state but inflated with air to the specified maximum pressure.

The point C1 is spaced from the locus of the equatorial plane of the tyre by an axial distance AC1 which is shorter than equivalent distance AC2 for point C2 and from the rotational axis Y-Y' of the tyre by a radial distance RC1, which is shorter than the equivalent distance RC2 for point C2.

Ideally the intersection point X2, at which the carcass line 12 shape when the inflating air pressure is at the maximum intersects with the line S-S' of the equatorial plane, is the same point as the intersection point X1 at which the carcass line 11 shape when the inflating air pressure is equal to 5% of the maximum one intersects with the same line S-S', due to strong hoop effect exerted by the low-extensibility and stiff cords composing the belt structure which is arranged in triangular configuration to firmly hold the carcass shapes. However, in practice, because of the elasticity of rubber and variation in the angles of final arrangement of cords some movement occurs and point X2 is forced to be a distance from the rotational axis Y-Y' of the tyre which is RX2 and this is 0.5% or less, indeed usually substantially 0.3% or less, than the radial distance RX1 of the point X1 from the abovesaid axis Y-Y'. That is to say, a relation as $RX1 \leqslant RX2 \leqslant 1.005RX1$ is obtained.

One of the most significant characteristics of this invention is that, in the abovesaid state of the tyre inflated with air to 100% of the specified maximum pressure, a circumferential length 2 RC1 drawn by the point C2 corresponding to the tread edge E2, is longer than the other circumferential length 2 RC1 drawn by the point C1 when the inflating air pressure is 5% of the specified maximum pressure. The ratio between lengths RC2/RC1 is always greater than that RX2 to RX1. That is, a tyre is designed to satisfy the relation as $RC2/RC1 > RX2/RX1$. If $RX1 = RX2$ and $RC1 = RC2$, even when a tyre is inflated, then the radial distance from the points C1 and C2 to the rotational axis Y-Y' of the tyre do not vary, that is the radii of curvature and the strain of tread surfaces, too, do not vary.

If $RX1 = RX2$ and $RC1 > RC2$, then the radial distance between the point C1 and the revolving axis Y-Y' of the tyre is reduced when the tyre is inflated and, therefore, the radius of curvature produces a rounder surface of the tread. In other words, such conditions that $RX1 = RX2$ and $RC1 \geqslant RC2$, and $RC2/RC1 < RX2/RX1$ are characteristics of tyres depending to the prior art which does not give the advantages of the present invention. One method of arranging the carcass ply line 11 in the shoulder region before inflation of the tyre to be radially below the carcass ply line which approximates the free balanced profile i.e. the carcass line produced when the tyre is inflated with air to 100% of the maximum pressure, is to increase the length of the line B1 which is the normal running from the tread edge E1 to the carcass line 11. Thus an increase in the rubber thickness or gauge to B1 lower the carcass line 11 below the carcass line 12. It must, however, be taken into consideration that if the rubber thickness B1 is increased a higher degree of heat is generated in the tyre due to increases in loss of internal energy in the rubber thereby causing decrease in durability of the tyre in high speed running. The invention, however, provides by an decrease in the radius of curvature TR1 of the tread before inflating the tyre and the increase in the height C1'which (will be referred to as the camber height C1' hereinafter) of a perpendicular line extending from a striaght line T-T touching the equator of the tyre and extending in parallel with the rotational axis Y-Y' of the tyre toward the tread edge point E1, results in an arrangement of carcass line 11 which is below the other carcass line 12 without increase in the rubber gauge B1.

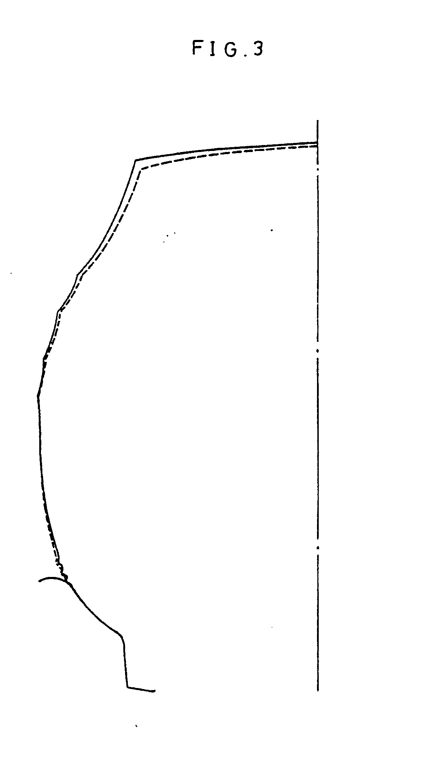

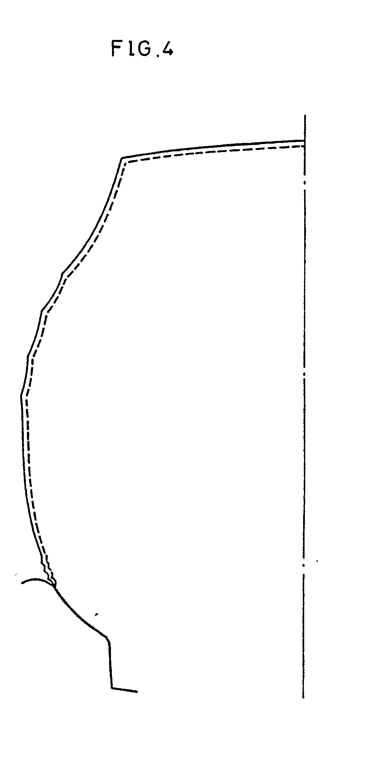

As described above, the carcass radial profile of the tyre, includes in which the carcass ply line to be produced with tyre inflation to 5% of the specified maximum air pressure is adapted to extend below the carcass ply line 12 to be produced with tyre inflation to the abovesaid maximum air pressure, is approximately that of a free balanced profile having the carcass ply line displaced upwards with increasing tyre inflation, and therefore, a tyre according to this invention is largely deformed, as shown in Fig 3 and as apparent from an example of tyre in size of 10.00R20 14PR, at a part including the buttress part extending above a level corresponding to 60% or more of the cross-sectional height of the tyre and the tread part. In comparison, a tyre as shown in Fig 4 and having a profile shape according to the prior art is substantially evenly deformed throughout. In Figs 3 and 4, the continuous line indicates external profile shape of a tyre inflated to have the specified maximum internal air pressure (7.25 kg/cm$^2$) and the dotted line and external profile of a tyre inflated to have the internal air pressure of 0.36 kg/cm$^2$, that is, 5% of the specified maximum pressure of 7.25 kg/cm$^2$, both profiles having been obtained by plaster casting. Displacement of the carcass ply line caused by the pressure of air blown into the tyre, that is, variation in the external profile of the tyre exerts influence upon the distribution of tension in the carcass as a matter of course and, in the case of a tyre according to this invention, tension as well as apparent stiffness in the carcass is high in an area extending from the upper part of the sidewall to the buttress and tread part where the degree of deformation is large.

Similarly, because of a larger degree of deformation (CR2-CR1) at both ends of the tread than that (RX2-RX1) at the equatorial plane of the tyre, compressive strain acts on the grounding surface of the tread part and increases lateral stiffness in cooperation with the aforesaid stiffness.

Furthermore, as described below in the section on effects of the invention, these figures bring about an improvement in durability of the tyre in high speed running, saving of fuel consumption and driving stability, in addition to an improvement in resistance of the tread crown part to cutting and wear.

Firstly, referring to the driving stability, cornering power is most important for the driving stability of vehicles, and the cornering power is expressed at an angle at the start of a curve of cornering force. In such tyres as that for truck and bus using high inner air pressure or that using belt layer composed of steel cord with high bending stiffness like radial tyre. It has been known that the cornering power becomes larger with increasing lateral stiffness of the tread region. On the other hand, in the case of tyres comprising a radial ply carcass, the lateral stiffness of the carcass is so small that the shoulder region of such tyres is apt to be lifted by virtue of torsional deformation under the influence of the lateral force which is undesirable for driving stability. The higher the apparent stiffness and the tension of the carcass in the lower region than the position where the tyre section width is maximum, the higher the said tendency. On the contrary, a tyre composed of a carcass profile according to this invention is designed to adopt the radial profile according to a completely new technical concept which increases the lateral stiffness of tread to have a high contribution in increasing the cornering power by means of increasing the tension of the carcass in the region between the buttress and the tread region and compression strain acting on the ground contacting part of tread and, in addition to the above, the reinforcing each lower sidewall a reinforcement layer composed of at least two rubberised ply layers each containing fibre cords such as nylon cords embedded therein, said cords being crossed with each other and at an angle of 30° to 50° with respect to the radial direction of a tyre. These reinforcement layers are arranged at the outer side of the sidewall and extend upwardly from the bead base to the position where the tyre section width is a maximum. Also an apex composed of a hard rubber stock and a soft rubber stock is disposed between the carcass ply and the turned up portion of the carcass ply and the reinforcing layers. The apex has a triangular cross section and gradually decreases in thickness into the sidewall of the tyre which contributes to increase the elasticity of the sidewall when lateral deformation is applied to the tyre by the lateral force with a slip angle acting on the tyre. The tyres according to this invention display high cornering power and thus give good driving stability.

Secondly, with regard to the rolling resistance of the tyres, the tread portion has the largest contribution to the rolling resistance of the tyre and in the case of such heavy duty tyres as tyres for truck and bus, this accounts for nearly 40% of all rolling resistance when one includes that of the buttress region, it accounts for about 50%.

Accordingly, it has been usual to use rubber compound with a high resilience to reduce the rolling resistance and give low internal energy loss in the tread rubber portion.

In this case, however, the wet grip performance which is one of the most important performance factors for the safety of such a tyre, is adversely affected depending upon the degree of the reduced rolling resistance.

In contradistinction to the above solution of the prior art, therefore the invention of the present application resides in the discovery that by suitably changing the inflated tread radius together with increasing the stiffness of by means of the high carcass tension in the region from buttress to tread as above described the actual movement of rubber caused in the tyre while rolling is reduced, which leads to a remarkable and unexpected reduction of the rolling resistance. In this case, the wet grip performance and the durability in high speed running are not adversely affected but in addition the steering performance and the resistance to wear and cutting for the grounding part of tread can be advantageously improved.

Two specific examples of tyres according to the present invention were tested by testing tyres of the size of 10.00 R20. Two tyres were inventive examples 1 and 2 and two other tyres were comparative examples 1 and 2 according to the prior art. Various kinds of tests such as tread surface strain, change in tread radius, tread cut, vertical deflection, rolling resistance, cornering force and comfortableness in vehicle riding were performed.

The specifications of test sample tyres are listed in Table 1.

## Table 1

|  | CR1 | CR2 | CR2/CR1 | RX1 | RX2 | RX2/RX1 |
|---|---|---|---|---|---|---|
| Comparative Example 1 | 85 | 90 | 1.06 | 491.35 | 492.85 | 1.003 |
| Comparative Example 2 | 90 | 90 | 1.00 | " | " | " |
| Inventive Example 1 | 110 | 90 | 0.82 | " | " | " |
| Inventive Example 2 | 120 | 90 | 0.75 | " | " | " |

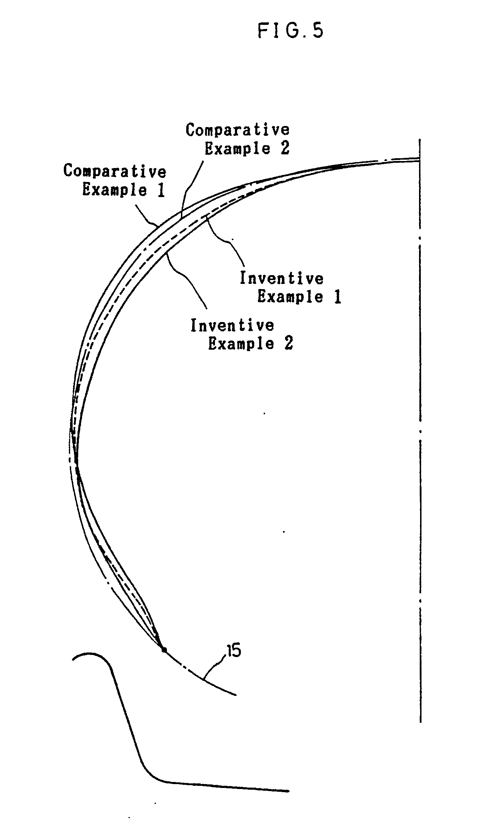

In all the tyres, the carcass was composed of one ply in which twisted steel cords (7 x 4 / 0.175 mm) disposed at an angle of 90 with respect to the equatorial line of the tyre and the belt structure was composed of twisted steel cords (1 x 3 / 0.20 + 6 / 0.38 mm), the first belt layer being disposed at $67°$ with respect to the equatorial plane of the tyre and the second through to the fourth belts was at $16°$. (The belt adjacent to the carcass layer is referred to as the first belt and succeeding ones as the second, third and fourth in turn.) The carcass profiles of test tyres where as shown in Fig 5. The component materials such as tread and others were common to all tyres.

Firstly, the tread surface strain and tread radius were measured on these tyres and then a cut test of tread rubber was carried out.

The test results were as shown in Table 2.

6

Table 2

| Tyres | Tread Radius *3 | | Tread Surface *2 (%) | Depth of cut (mm) *1 |
|---|---|---|---|---|
| | TR1 | TR2 | | |
| Comparative Example 1 | 560 | 530 | + 1.6 | 15.0 |
| Comparative Example 2 | 560 | 560 | 0 | 8.0 |
| Inventive Example 1 | 520 | 650 | - 1.4 | 4.0 |
| Inventive Example 2 | 475 | 620 | - 1.6 | 2.8 |

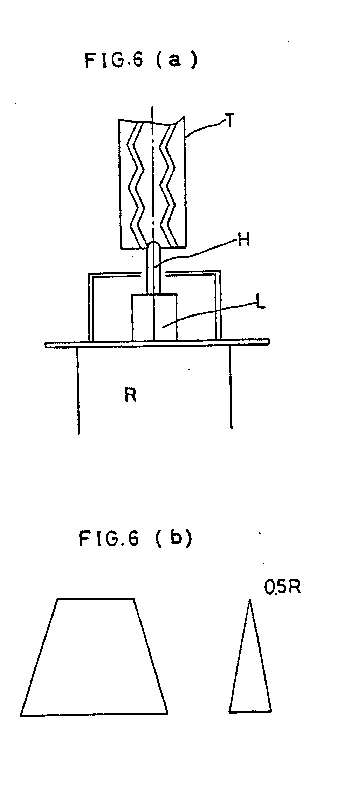

*1  The term "depth of cut" means a depth of a cut produced on the tread when a jig T as shown in Fig 6 is pressed with a certain intensity of force to a tyre inflated to the specified maximum internal air pressure.

*2 "Tread surface strain" is a term defined such that, when a length drawn on the tread surface between scale marks each 10 mm long along the direction of the tyre axis increases with inflation of the tyre, tensile strain (+) acts and, when said length decreases, compressive strain (-) acts.

*3 Tread radius was measured by an R-gauge.

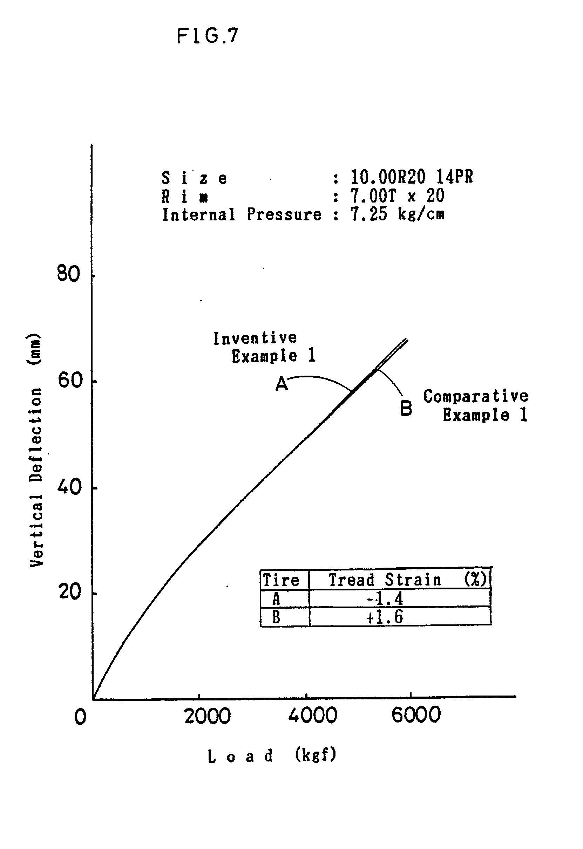

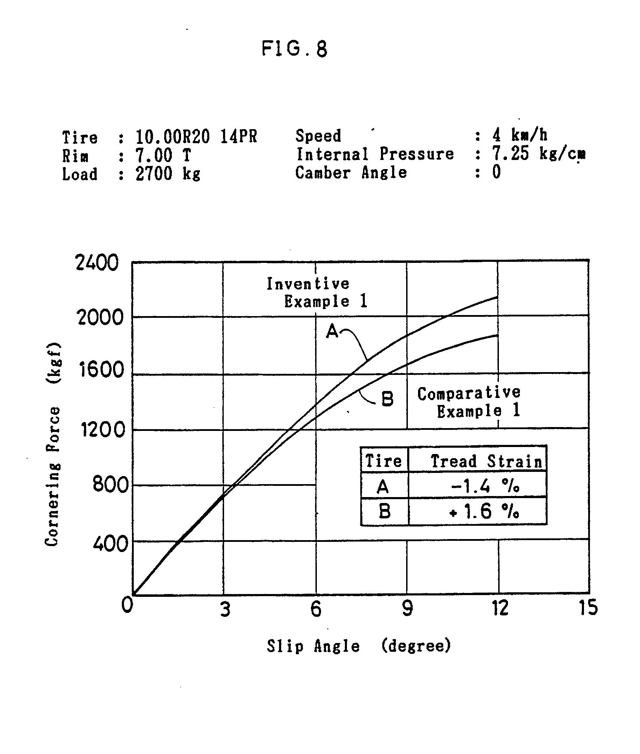

Next the results of investigation of the vertical spring rate as a scale for evaluating comfort in vehicle ride and stability in driving and of the relation between cornering force and tread surface strain provided the data in Figs 7 and Fig 8. The tyre of example 1 according to this invention in which compressive strain acts on the tread surface was not different in degree of deflection from comparative example 1 in which tensile strain acts but it was approximately 10% better in intensity of cornering force. This data reflects that high tension of the carcass ply acting in the portion extending from buttress to tread part and compressive strain acting in the direction of the tyre axis provided higher lateral stiffness at the ground contacting surface.

Next the results of investigation of the vertical spring rate as a scale for evaluating comfort in vehicle ride and stability in driving and of the relation between cornering force and tread surface strain provided the data in Figs 7 and Fig 8. The tyre of example 1 according to this invention in which compressive strain acts on the tread surface was not different in degree of deflection from comparative example 1 in which tensile strain acts but it was approximately 10% better in intensity of cornering force. This data reflects that high tension of the carcass ply acting in the portion extending from buttress to tread part and compressive strain acting in the direction of the tyre axis provided higher lateral stiffness at the ground contacting surface.

From the above said results, it can be seen that comfort in vehicle ride provided by a tyre having a profile according to this invention is not different, as will be referred to later again from that by the conventional tyre but the tyre is substantially superior in respect to stability in driving.

Similarly, comparison of the rolling resistance of a tyre of example 1 according to this invention with that of comparative example 1 of the prior art, as shown in Fig 7, indicates that the former is 10% or more less than the latter and proportionately contributes to a substantial reduction in fuel consumption on a vehicle. The reason is that the movement of rubber in the tyre according to this invention occurring every revolution of the tyre is smaller than that of the conventional tyre in the areas extending from the ground contacting surface to the buttress region and as a result energy loss in the tyre is reduced.

The same remark as above is applicable to heat generation in the tyre too.

The rolling resistance was evaluated by resistance of the tyre during running after the tyre is pressed to the surface of a steel drum of 1.7 m in diameter so as to be loaded as specified and driven for warming up for about 45 minutes at a speed and with an internal pressure as specified.

Next, the intensity of the reactive force generated at the rotational axis of the tyres of comparative example 1 and inventive example 1 during running over protrusions in the test course where measured and data as shown in Table 3 for comparing the two examples with respect to comfort in riding during jot were obtained.

## Table 3

### Comparison of test results of comfort in ride

|  | Speed | Comparative Example 1 | Inventive Example 2 |
|---|---|---|---|
| Vertical reactive force during ride over protrusions | 50 km/h<br>80 km/h | 100<br>100 | 100<br>102 |
| Back and forth reactive during ride over protrusions | 50 km/h<br>80 km/h | 100<br>100 | 101<br>100 |

This Table shows the results of measurements of reactive force in inventive example 1 in terms of an index based on the assumption that the index of the reactive force in comparative example 1 is 100, wherein the larger the index the better the comfort in vehicle ride.

From Table 3, the tyre according to the present invention is shown to be superior to the prior art tyre in providing comfort in vehicle ride.

The reason for the above fact is that a great deal of flexional deformation inflicted on the tyre when the tyre rides over protrusions on the ground is absorbed by the sidewall parts of the tyre. In the tyre according to this invention, tension in the carcass ply is low in the region extending from positions at which deformation absorption capacity reaches the maximum and between which the largest width of the tyre lies, to the bead parts under the sidewall portions, whereby the tension distribution in the said region is best able to absorb flexional deformation comparatively easily.

Next, the values obtained from comparison tests of wet grip performance are shown in Table 4.

## Table 4

|  | Comparative Example 1 | Inventive Example 1 |
|---|---|---|
| Index of wet slip | 100 | 107 |

The wet grip performances were observed by measuring the breaking distances travelled by a vehicle driven at a speed of 80 km/h on an asphalt-paved wet road and indicated in terms of an index on the assumption that the index of braking distance of comparative example 1 is 100. In this case too, the larger the index, the better the performance and a tyre of inventive example 1 which exhibited a strong braking force was shown to be excellent in wet grip performance which is one of the most important requirements for safety of vehicles.

As mentioned above, the wet grip performance depends on the stiffness in the tread region and the results indicate the fact that when the vehicle runs on a wet road or high speed, the tyre according to the present invention has a high force which breaks through the resistance of the water on the road and this provides a higher speed before hydroplain ng is induced which provides better safety.

Moreover, in view of the improved road conditions of these days, more importance is attached to durability of a tyre and so test of durability in high speed running for said both tyres was performed according to the following method, the results being shown in Table 5.

## Table 5

| | Test Speed : Running Time |
|---|---|
| Comparative Example 1 | 80 km/h : 80 min to breakage |
| Inventive Example 1 | 90 km/h : 90 min to breakage |

The tyres were driven on the drum type driving tester according to the stepped speed running method on conditions that:

Load: 3,780 kg

Initial internal pressure: 7.25 $kg/cm^2$

Rim: 7.50 V

The results were evaluated by the level of speed at which the tyre was broken due to heat generation and the length of time spent for running at the above speed. In this test, the tyre according to the present invention cleared a speed of 80 km/h but the tyre according to the prior art could clear only 70 km/h, lower by one order than 8 km/h. The reason is that the movement of rubber of the tyre according to the present invention occuring every revolution of the tyre is smaller than that of the prior art tyre in the region extending from the ground contacting surface to the buttress parts and the camber height C1 was made to be large so that the rubber thickness B1 at both tread shoulder parts was designed to be less than that of the prior art tyre.

Next, as regards to resistance of the tread to wear, comparison tests using the vehicles were performed and the amounts of wear of the treads per 1,000 km running were compared by measurements of groove depths after 50,000 km running. As shown in Table 6, a tyre according to this invention demonstrated over 10% improvement in resistance to wear thanks to the lower heat generation, more uniform distribution of grounding pressure and compression strain acting on the tread surface.

## Table 6
## Results of tests of resistance to
## wear using actual vehicles

| | Index of wear of tread * |
|---|---|
| Comparative Example 1 | 100 |
| Inventive Example 1 | 112 |

\* a larger value means a superior performance

In summary therefore, the present invention provides a well-balanced tyre in which the carcass radial surface profile is expanded radially outwardly at both shoulder parts when the tyre is inflated so that resistance to wear, durability in high speed running (low degree of heat generation), resistance to cutting and rolling resistance (low fuel consumption) including wet grip performance and stability in vehicle driving are advantageously improved without reducing comfort in vehicle ride when subjected to jolting.

**Claims**

1. A pneumatic radial ply tyre, comprising a tread having a radially outwardly curved profile, a reinforcing carcass composed of at least one ply (1) of non-extensible or low-extensible cords substantially radially arranged in parallel with each other, and a belt (7) between the carcass and the tread composed of at least two plies of parallel cords laid at a comparatively small degree of angle with respect to the circumferential direction of the tyre so that the cords of each ply are arranged crosswise to the cords of the adjacent ply, the radius curvature TR of the said curved profile of the tread increasing with increase in air pressure whereby the radius of curvature TR2 when the tyre is mounted on the rim officially specified for the tyre and inflated to the specified maximum pressure and the radius of curvature TR1 when the tyre is not inflated to the specified maximum pressure satisfy the relationship TR2/TR1 > 1.0, characterised in that the radii TR2 and TR1 satisfy the relationship 1,2 ≼ TR2/TR1 ≼ 1,5, when TR2 is related to 5% of the maximum pressure, and the radius of curvature TR2 is in a range of 400mm to 600mm so that compression strain in the axial direction of the tyre is caused to act in the tread to increase the lateral stiffness of the tyre.

2. A pneumatic tyre according to claim 2, characterised in that the radius of curvature (CR2) of the shoulder part of the carcass ply line (11,12) becomes smaller with increasing air pressure, and the radius of curvature CR1 of the shoulder part of the carcass ply line (11) when the tyre is inflated with air to 5% of the specified maximum pressure and the radius of curvature CR2 of the shoulder part of the carcass ply line (12) when the tyre is inflated with air to the specified maximum pressure satisfy the relationship 0.70 ≼ CR2/CR1 ≼ 0.95.

3. A pneumatic tyre as set forth in claims 1 or 2 characterised in that the belt (7) comprises two plies arranged at small angles between 10 and 25 degrees equal in degrees but directionally opposite to each other with respect to the circumferential direction of the tyre and one ply arranged at a large angle between 40 and 70 degrees with respect to the circumferential direction of the tyre, and the width (BW) of the belt is 80 to 95% of the width (RW) of the tread.

**Revendications**

1. Pneumatique à carcasse radiale, comprenant une bande de roulement ayant un profil courbé radialement vers l'extérieur, une carcasse d'armature composée d'au moins une nappe (1) de câblés inextensibles ou peu extensibles, placés en direction sensiblement radiale parallèlement les uns aux autres, et une ceinture (7) placée entre la carcasse et la bande de roulement et composée d'au moins deux nappes de câblés parallèles faisant un petit angle avec la direction circonférentielle du pneumatique si bien que les câblés de chaque nappe sont disposés transversalement aux câblés de la nappe adjacente, le rayon de courbure TR du profil courbe de la bande de roulement augmentant lorsque la pression de l'air augmente, le rayon de courbure TR2, lorsque le pneumatique est monté sur la jante nominalement spécifiée du pneumatique et est gonflé à la pression maximale spécifiée, et le rayon de courbure TR1, lorsque le pneumatique n'est pas gonflé à la pression maximale spécifiée, remplissant la condition TR2/TR1 > 1,0, caractérisé en ce que les rayons TR2 et TR1 correspondent à la relation :
    1,2 ≼ TR2/TR1 ≼ 1,5
TR2 correspondant à 5 % de la pression maximale, et le rayon de courbure TR2 est compris entre 400 et 600 mm, si bien que la déformation par compression dans la direction axiale du pneumatique agit dans la bande de roulement en augmentant la rigidité latérale du pneumatique.

2. Pneumatique selon la revendication 1, caractérisé en ce que le rayon de courbure CR2 de la partie d'épaulement de la courbe (11, 12) de la nappe de carcasse diminue lorsque la pression de l'air augmente, et le rayon de courbure CR1 de la partie d'épaulement de la courbe (11) de la nappe de carcasse, lorsque le pneumatique est gonflé à 5 % de la pression maximale spécifiée, et le rayon de courbure CR2 de la partie d'épaulement de la courbe (12) de nappe de carcasse lorsque le pneumatique est gonflé à la pression maximale spécifiée, correspondent à la relation :

$$0,70 \leqslant CR2/CR1 \leqslant 0,95$$

3. Pneumatique selon la revendication 1 ou 2, caractérisé en ce que la ceinture (7) comporte deux nappes disposées avec de petits angles compris entre 10 et 25°, de même amplitude mais de sens opposés l'un à l'autre par rapport à la direction circonférentielle du pneumatique, une nappe faisant un angle important compris entre 40 et 70° avec la direction circonférentielle du pneumatique, et la largeur (BW) de la ceinture est comprise entre 80 et 95 % de la largeur (RW) de la bande de roulement.

**Ansprüche**

1. Radiallagen-Luftreifen mit einem Laufstreifen, der ein radial nach außen gekrümmtes Profil besitzt, mit einer Verstärkungskarkasse, die zusammengesetzt ist aus mindestens einer Lage (1) nicht dehnbarer oder niedrig-dehnbarer Korde, die im wesentlichen radial parallel zueinander angeordnet sind, und einem Gürtel (7) zwischen der Karkasse und dem Laufstreifen, der zusammengesetzt ist aus mindestens zwei Lagen paralleler Korde, die mit einer vergleichsweise kleinen Winkelgröße bezüglich der Umfangsrichtung des Reifens so gelegt sind, daß die Korde jeder Lage überkreuzend zu den Korden der benachbarten Lage angeordnet sind, wobei der Krümmungsradius TR des gekrümmten Profils der Laufffläche sich mit ansteigendem Luftdruck erhöht, wodurch der Krümmungsradius TR2 bei auf der offiziell für den Reifen angegebenen Felge aufgezogenem und bis zu dem angegebenen Maximaldruck aufgepumptem Reifen und der Krümmungsradius TR1 bei nicht auf den festgelegten Maximaldruck aufgepumptem Reifen die Beziehung TR2/TR1 > 1,0 erfüllen, dadurch gekennzeichnet, daß die Radien TR2 und TR1 die Beziehung 1,2 ⩽ TR2/TR1 ⩽ 1,5 erfüllen, wenn TR2 auf 5% des Maximaldrucks bezogen ist, und der Krümmungsradius TR2 sich in einem Bereich von 400 mm bis 600 mm befindet, so daß die Kompressionsspannung in Axialrichtung des Reifens dazu gebracht wird, in dem Laufstreifen zur Erhöhung der Quersteifigkeit des Reifens zu wirken.

2. Luftreifen nach Anspruch 2, dadurch gekennzeichnet, daß der Krümmungsradius (CR2) des Schulterteils der Karkasslagenlinie (11, 12) mit ansteigendem Luftdruck kleiner wird, und daß der Krümmungsradius CR1 des Schulterteils der Karkasslagenlinie (11), wenn der Reifen mit Luft auf 5% des angegebenen Maximaldrucks aufgepumpt ist, und der Krümmungsradius CR2 des Schulterteils der Karkasslagenlinie (12), wenn der Reifen mit Luft auf den festgelegten Maximaldruck aufgepumpt ist, die Beziehung 0,70 ⩽ CR2/CR1 ⩽ 0,95 erfüllen.

3. Luftreifen nach Anspruch 1 oder 2, dadurch gekennzeichnet, daß der Gürtel (7) zwei mit kleinen Winkeln zwischen 10 und 25° angeordnete Lagen umfaßt, die gleiche Gradzahl haben, jedoch einander entgegengesetzte Richtung bezüglich der Umfangsrichtung des Reifens aufweisen, und eine Lage mit einem großen Winkel zwischen 40 und 70° bezüglich der Umfangsrichtung des Reifens, und daß die Breite (BW) des Gürtels 80 bis 95% der Breite (RW) des Laufstreifens beträgt.

## FIG.1

FIG. 2

FIG.3

FIG.4

FIG. 5

Comparative
Example 2

Comparative
Example 1

Inventive
Example 1

Inventive
Example 2

15

FIG.6 ( a )

T

H

L

R

FIG.6 ( b )

0.5R

## FIG.7

S i z e : 10.00R20 14PR
R i m : 7.00T x 20
Internal Pressure : 7.25 kg/cm

Inventive
Example 1

A

B Comparative
Example 1

| Tire | Tread Strain (%) |
|------|------------------|
| A | -1.4 |
| B | +1.6 |

Vertical Deflection (mm)

Load (kgf)

## FIG. 8

Tire : 10.00R20 14PR   Speed : 4 km/h
Rim : 7.00 T   Internal Pressure : 7.25 kg/cm
Load : 2700 kg   Camber Angle : 0

| Tire | Tread Strain |
|------|--------------|
| A | −1.4 % |
| B | + 1.6 % |

Inventive Example 1

Comparative Example 1

Cornering Force (kgf) vs Slip Angle (degree)

FIG.9

10.00R20 14PR
(Internal Pressure 7.25 kg/cm )